# EUROPÄISCHE PATENTSCHRIFT

(11) **EP 3 214 718 B1**
(45) Veröffentlichungstag und Bekanntmachung des Hinweises auf die Patenterteilung: **04.12.2019**
(21) Anmeldenummer: 16158006.3
(22) Anmeldetag: 01.03.2016
(51) Int. Cl.: H02J 3/38, H02J 3/00, H02J 3/14

(54) **VERFAHREN UND SYSTEM ZUM BETRIEB EINES AUTARKEN ENERGIEVERSORGUNGSNETZES**
METHOD AND SYSTEM FOR OPERATING A SELF-SUFFICIENT ENERGY SUPPLY NETWORK
PROCEDE ET SYSTEME DE FONCTIONNEMENT D'UN RESEAU D'ALIMENTATION EN ENERGIE AUTARCIQUE

(43) Veröffentlichungstag der Anmeldung: 06.09.2017
(73) Patentinhaber: Siemens Aktiengesellschaft, 80333 München (DE)
(72) Erfinder: Werner, Thomas, 91126 Rednitzhembach (DE); Fröhner, Wiebke, 92224 Amberg (DE); Reischböck, Markus, 91056 Erlangen (DE)

(56) Entgegenhaltungen:
- EP-A1- 2 953 230
- US-A1- 2013 261 823
- US-A1- 2014 172 182
- US-A1- 2014 252 855
- US-A1- 2014 277 599
- US-A1- 2015 255 982

## Beschreibung

Die Erfindung betrifft ein Verfahren zum Betreiben eines autarken Energieversorgungsnetzes, das eine Anzahl von Energieerzeugern und eine Anzahl von Energieverbrauchern aufweist, wobei eine lokale Steuereinrichtung vorgesehen ist, die zur Ansteuerung der Energieerzeuger und/oder der Energieverbraucher eingerichtet ist, und wobei bei dem Verfahren die folgenden Schritte ausgeführt werden: Bereitstellen von Modelldaten des autarken Energieversorgungsnetzes in einem Datenspeicher einer der lokalen Steuereinrichtung übergeordneten Recheneinrichtung, wobei die Modelldaten die jeweiligen Energieerzeuger sowie deren Betriebsparameter angeben; Ermitteln eines Betriebsplans für das autarke Energieversorgungsnetz mit der Recheneinrichtung unter Verwendung der Modelldaten, wobei der Betriebsplan den Betriebszustand des autarken Energieversorgungsnetzes während eines bestimmten Zeitintervalls angibt; Übermitteln des Betriebsplans an die lokale Steuereinrichtung; und Ansteuern der Energieerzeuger und/oder der Energieverbraucher entsprechend der Vorgaben des Betriebsplans durch die lokale Steuereinrichtung.

Ein Verfahren der genannten Art ist beispielsweise aus der US 2014/172182 A1 bekannt.

Als Reaktion auf Probleme bezüglich der Versorgungssicherheit von Energieversorgungsnetzen und des steigenden Anteils von regenerativen Energieerzeugern (z.B. Windkraftanlagen, Photovoltaikanlagen) werden in jüngerer Zeit verstärkt autarke Energieversorgungsnetze, nachfolgend auch als "Microgrids" bezeichnet, eingesetzt. Bei solchen Microgrids handelt es sich um kleinere Energieversorgungsnetze mit Energieerzeugern und Energieverbrauchern. Daneben können solche Microgrids auch elektrische Energiespeicher umfassen. Solche Energiespeicher werden nachfolgend je nach ihrer Betriebsweise entweder als Energieerzeuger (Energiespeicher gibt elektrische Leistung ab) oder Energieverbraucher (Energiespeicher nimmt elektrische Leistung auf) angesehen. Üblicherweise ist ein Microgrid hinsichtlich der Kapazitäten der vorhandenen Energieerzeuger und Energieverbraucher so ausgelegt, dass sich Erzeugung und Verbrauch elektrischer Energie zumindest näherungsweise ausgleichen, so dass von einem autarken, d.h. selbstversorgenden, Betrieb gesprochen werden kann.

Microgrids sind darüber hinaus entweder gar nicht mit anderen Energieversorgungsnetzen verbunden (z.B. Microgrids auf Inseln oder in abgelegenen Gebieten) oder sie sind an einem Netzanschlusspunkt mit einem übergeordneten Energieversorgungsnetz (Verteilnetz) gekoppelt und können von diesem elektrische Leistung beziehen oder in dieses elektrische Leistung einspeisen. Bei der letztgenannten Variante besteht die Möglichkeit eines Leistungsausgleichs mit dem übergeordneten Energieversorgungsnetz, während gleichzeitig sichergestellt ist, dass beim Ausfall des übergeordneten Energieversorgungsnetzes mittels der eigenen Energieerzeuger die interne Stromversorgung des Microgrids aufrecht erhalten werden kann.

Der Betrieb eines Microgrids kann hinsichtlich verschiedener Parameter optimiert werden. Beispielsweise kann das Microgrid mit möglichst geringen Kosten oder möglichst geringem CO₂-Ausstoß betrieben werden. Dabei sind sowohl konventionelle Energieerzeuger (z.B. Dieselgeneratoren) als auch regenerative Energieerzeuger (Energieerzeuger, die elektrische Energie aus erneuerbaren Quellen, z.B. Sonne, Wind, erzeugen) sowie etwaige Energiespeicher zu betrachten, zu modellieren und zu steuern. Um den Netzbetrieb möglichst effizient auszugestalten, besteht nämlich ein wesentlicher Punkt darin, für das Microgrid die zukünftige netzinterne Energieerzeugung bzw. den zukünftigen netzinternen Energieverbrauch zu prognostizieren, wobei beide Größen meist zumindest teilweise wetterabhängig sind, und den Portfoliomix, d.h. die Zusammensetzung der Nutzung der einzelnen Energieerzeuger, zu optimieren.

Die heute verfügbaren Lösungen zur Energieautomatisierung in Micogrids basieren im Wesentlichen auf klassischen Leitsystemen, wie sie beispielsweise auch in der Stationsautomatisierung (z.B. Siemens SICAM-Serie) oder der Netzleittechnik (z.B. Siemens Spectrum Power-Serie) eingesetzt werden. Diese Systeme sind im Prinzip für die Steuerung und Regelung von Microgrids gut geeignet. Allerdings wenden sich ihre Bedien- und Modellierungskonzepte primär an technisch ausgebildetes Fachpersonal, das jedoch für die vorgenannten Anwendungsfälle meist nicht zur Verfügung steht und dessen Einsatz darüber hinaus vergleichsweise hohe Kosten bedeutet. Außerdem ist das Kosten-Nutzen-Verhältnis solcher Automatisierungslösungen für die Größenordnung der Microgrids, die üblicherweise nur einige MW Erzeugungsleistung besitzen, unvorteilhaft. Dies betrifft nicht nur die Systemkosten (also Bauteile und Software der jeweiligen Automatisierungslösung), sondern vor allem den Aufwand, der zur Parametrierung und Inbetriebsetzung erforderlich ist. In diesem Zusammenhang erzeugt nämlich insbesondere die Einrichtung der üblicherweise notwendigen mathematischen Modellierungsfunktionen einen hohen manuellen Analyse- und Parametrieraufwand. Darüber setzen die bekannten Automatisierungslösungen im Allgemeinen eine ständige Kommunikation zwischen den Microgrids und der Leitstelle voraus. Dies ist gerade dann problematisch, wenn Microgrids zur sicheren Stromversorgung in abgelegenen Regionen dienen oder beim Ausfall des übergeordneten Energieversorgungsnetzes (der meist auch mit einem Ausfall der Weitbereichskommunikation einhergeht) .

Aus der US Patentanmeldung US 2010/0023174 A1 ist außerdem ein Steuersystem von Microgrids bekannt, bei dem Microgrids von jeweils einzelnen lokalen Steuereinrichtungen gesteuert werden und die lokalen Steuereinrichtungen der Microgrids untereinander Steuerdaten austauschen, um auch den Betrieb eines übergeordneten Energieversorgungsnetzes in die Optimierung einzubeziehen. Auch bei dieser Lösung besteht ein hoher Konfigurationsaufwand für die einzelnen lokalen Steuereinrichtungen.

Der Erfindung liegt die Aufgabe zugrunde, den für den Betrieb eines autarken Energieversorgungsnetzes (Microgrids) erforderlichen Parametrieraufwand sowie den Aufwand zum Betrieb des Energieversorgungsnetzes zu verringern.

Diese Aufgabe wird durch das in Patentanspruch 1 beschriebene Verfahren gelöst. Hiernach ist vorgesehen, dass der Betriebsplan für das jeweilige Zeitintervall einen Gesamt-Betriebsplan, der eine elektrische Leistung an einem Netzanschlusspunkt des autarken Energieversorgungsnetzes angibt, und Teil-Betriebspläne für die Energieerzeuger und/oder Energieverbraucher des autarken Energieversorgungsnetzes umfasst; und im Betrieb des autarken Energieversorgungsnetzes von der lokalen Steuereinrichtung die aktuelle Leistungsbilanz des autarken Energieversorgungsnetzes als Differenz zwischen in das autarke Energieversorgungsnetz eingespeister und aus diesem entnommener Leistung gebildet wird; von der lokalen Steuereinrichtung eine positive Reserveleistung und eine negative Reserveleistung des autarken Energieversorgungsnetzes bestimmt wird; wobei die positive Reserveleistung als Differenz aus der maximal möglichen Leistungsabgabe und der tatsächlichen aktuellen Leistungsabgabe aller aktiven Energieerzeuger und die negative Reserveleitung als Differenz aus der tatsächlichen aktuellen Leistungsabgabe und der minimal möglichen Leistungsabgabe aller aktiven Energieerzeuger bestimmt werden; die aktuelle Leistungsbilanz mit der positiven und der negativen Reserveleistung verglichen wird; und das Ergebnis des Vergleichs zum Ansteuern der Energieerzeuger herangezogen wird.

Ein Vorteil des erfindungsgemäßen Verfahrens besteht darin, dass nahezu die vollständige Parametrierung der lokalen Steuereinrichtung nicht vor Ort, sondern mittels der Recheneinrichtung durchgeführt wird. Damit entfällt für den Betreiber des Microgrids vor Ort das Einsetzen von geschultem Personal. Außerdem können als lokale Steuereinrichtungen vergleichsweise einfache Geräte verwendet werden, an die keine hohen Anforderungen bezüglich ihrer Rechenleistung gestellt werden müssen, da die rechenintensiven Prozesse, insbesondere die mathematische Betriebsoptimierung, mittels der Recheneinrichtung durchgeführt werden.

Zu den mittels der Recheneinrichtung bereitgestellten Modelldaten gehören unter anderem z.B. der Typ und der Aufstellungsort des jeweiligen Energieerzeugers, eine räumliche Ausrichtung, eine Benennung, minimale und maximale Erzeugungsleistungen der Energieerzeuger, Wirkungsgradkennlinien, Brennstoffpreise eines etwaigen verwendeten Brennstoffs oder Batteriekapazitäten.

Erfindungsgemäß ist vorgesehen, dass der Betriebsplan für das jeweilige Zeitintervall einen Gesamt-Betriebsplan, der eine elektrische Leistung an einem Netzanschlusspunkt des autarken Energieversorgungsnetzes angibt, und Teil-Betriebspläne für die Energieerzeuger und/oder Energieverbraucher des autarken Energieversorgungsnetzes umfasst.

Auf diese Weise können nicht nur die einzelnen Energieerzeuger und/oder -verbraucher des Microgrids zum Betrieb angesteuert werden, es kann auch durch den Gesamt-Betriebsplan eine elektrische Leistung am Netzanschlusspunkt vorgegeben werden. Hierdurch kann beispielsweise bestimmt werden, dass das Microgrid in dem Zeitintervall eine vorgegebene elektrische Leistung aufnehmen oder abgeben soll oder komplett autark im Inselbetrieb betrieben werden soll. Bei solchen Microgrids die ohnehin keine Kopplung mit einem Verteilnetz aufweisen, ist die elektrische Leistung am (in diesem Fall nicht vorhandenen) Netzanschlusspunkt zu jeder Zeit auf null zu setzen.

Hinsichtlich des Betriebs des Microgrids ist erfindungsgemäßen darüber hinaus vorgesehen, dass im Betrieb des autarken Energieversorgungsnetzes von der lokalen Steuereinrichtung die aktuelle Leistungsbilanz des autarken Energieversorgungsnetzes als Differenz zwischen in das autarke Energieversorgungsnetz eingespeister und aus diesem entnommener Leistung gebildet wird, von der lokalen Steuereinrichtung eine positive Reserveleistung und eine negative Reserveleistung des autarken Energieversorgungsnetzes bestimmt wird, die aktuelle Leistungsbilanz mit der positiven und der negativen Reserveleistung verglichen wird, und das Ergebnis des Vergleichs zum Ansteuern der Energieerzeuger herangezogen wird.

Die positive Reserveleistung wird hierbei als Differenz aus der maximal möglichen Leistungsabgabe und der tatsächlichen aktuellen Leistungsabgabe aller aktiven (eingeschalteten) Energieerzeuger bestimmt. Entsprechend wird die negative Reserveleistung als Differenz aus der tatsächlichen aktuellen Leistungsabgabe und der minimal möglichen Leistungsabgabe aller aktiven Energieerzeuger bestimmt.

Dies ermöglicht eine Regelung des Betriebs des Microgrids anhand nur weniger Messgrößen und einfacher Berechnungen. Diese können auch mit vergleichsweise einfachen Steuereinrichtungen durchgeführt werden, ohne dass an diese zu hohe Rechenleistungsanforderungen gestellt werden.

Eine vorteilhafte Weiterbildung des erfindungsgemäßen Verfahrens sieht vor, dass zum Ermitteln des Betriebsplans mittels der Recheneinrichtung für das jeweilige Zeitintervall eine voraussichtliche Einspeiseleistung der jeweiligen Energieerzeuger bestimmt und die voraussichtliche Einspeiseleistung der jeweiligen Energieerzeuger zum Ermitteln des Betriebsplans herangezogen wird.

Bei dieser Ausführungsform werden vorteilhaft die Betriebsprognosen der jeweiligen Energieerzeuger für die Optimierung des Betriebs zugrunde gelegt. Hierdurch kann die voraussichtliche Einspeiseleistung jedes Energieerzeugers für sich prognostiziert werden, so dass für das fragliche Zeitintervall z.B. eine Planung erfolgen kann, ob von einem etwaigen übergeordneten Verteilnetz elektrische Leistung bezogen werden muss oder in dieses, z.B. zur Optimierung eines monetären Gewinns, eingespeist werden kann.

In diesem Zusammenhang sieht eine vorteilhafte Ausführungsform des erfindungsgemäßen Verfahrens weiter vor, dass für das jeweilige Zeitintervall mittels der Recheneinrichtung eine Wetterprognose für den Bereich des autarken Energieversorgungsnetzes ermittelt wird, und für solche Energieerzeuger, deren Einspeiseleistung von aktuellen Wetterverhältnissen im Bereich des jeweiligen Energieerzeugers abhängt, unter Verwendung solcher Informationen der Wetterprognose, die für den Betrieb des jeweiligen Energieerzeugers relevant sind, sowie zumindest einem Teil der Modelldaten, die voraussichtliche Einspeiseleistung für das jeweilige Zeitintervall bestimmt wird.

Insbesondere solche Energieerzeuger, die elektrische Energie aus kurzfristig erneuerbaren Energiequellen (Windkraft, Sonneneinstrahlung) erzeugen, sind nämlich in besonderem Maße von der jeweiligen Wetterlage im Bereich des jeweiligen Energieerzeugers abhängig. Gemäß der letztgenannten Ausführungsform ermittelt nun die Recheneinrichtung eine Wetterprognose für den Bereich der jeweiligen Energieerzeuger. Da Microgrids oftmals eine nur geringe räumliche Ausdehnung aufweisen, kann es in solchen Fällen ausreichend sein, die Wetterlage nur für den Bereich des Microgrids zu ermitteln, und diese Wetterlage für alle vorhandenen Energieerzeuger zu verwenden. Auf Basis der Wetterlage, bzw. Informationen, die für die Erzeugung elektrischer Energie des jeweiligen Energieerzeugers relevant sind (z.B. Windstärke, Bewölkung, Sonnenschaudauer und Einfallswinkel des Sonnenlichts) kann die Recheneinrichtung bei Kenntnis bestimmter Modelldaten für den jeweiligen Energieerzeuger (z.B. Wirkungsgrad, Aufstellungsort, Ausrichtung) die voraussichtliche Einspeiseleistung für das fragliche Zeitintervall bestimmen. So können auch für solche Energieerzeuger mittels der Recheneinrichtung Annahmen getroffen werden, ohne dass hierfür die lokalen Steuereinrichtungen eingesetzt werden müssten.

Gemäß einer weiteren vorteilhaften Ausführungsform des erfindungsgemäßen Verfahrens ist vorgesehen, dass die Modelldaten als Benutzereingaben über einen von der Recheneinrichtung bereitgestellten oder mit dieser verbundenen Dateneditor erfasst und in dem Datenspeicher der Recheneinrichtung abgespeichert werden.

Hierdurch wird eine einfache Möglichkeit zur Erfassung der Modelldaten durch die Recheneinrichtung bereitgestellt. Eine manuelle Eingabe an einer der lokalen Steuereinrichtungen ist erneut nicht notwendig.

Eine weitere vorteilhafte Ausführungsform des erfindungsgemäßen Verfahrens sieht zudem vor, dass die Recheneinrichtung von einer Datenverarbeitungseinrichtung gebildet wird, die als Cloud-Computersystem ausgebildet ist.

Bei dieser Ausführungsform wird die Recheneinrichtung in besonders flexibler Weise ausgebildet. Unter einem Cloud-Computersystem soll hierbei eine Anordnung mit einer oder mehreren Datenspeichereinrichtungen und einer oder mehreren Datenverarbeitungseinrichtungen verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtungen (z.B. Server) dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen. Sofern das Cloud-Computersystem mehrere einzelne Komponenten aufweist, sind diese auf geeignete Weise zur Datenkommunikation miteinander verbunden (z.B. durch ein Kommunikationsnetzwerk). Einem Cloud-Computersystem können beliebige Daten zur Datenspeicherung und/oder -verarbeitung zugeführt werden. Das Cloud-Computersystem selbst stellt die gespeicherten Daten und/oder die Ergebnisse der durchgeführten Datenverarbeitung wiederum anderen Geräten, z.B. der lokalen Steuereinrichtung des Microgrids und einer mit dem Cloud-Computersystem verbundenen Computer-Arbeitsstation (Workstation), zur Verfügung. Ein Cloud-Computersystem kann beispielsweise durch ein Rechenzentrum oder auch mehrere vernetzte Rechenzentren bereitgestellt werden. Üblicherweise ist ein Cloud-Computersystem räumlich entfernt von dem Microgrid ausgebildet.

Das Cloud-Computersystem kann dabei beispielsweise von demselben Betreiber wie das Microgrid betrieben werden. Beispielsweise könnte es sich dabei um eine Serveranlage oder ein Rechenzentrum desselben Betreibers handeln. Es kann aber auch vorgesehen sein, dass das Cloud-Computersystem einem anderen Betreiber als dem Betreiber des Microgrids zugeordnet ist. Dies kann für den Betreiber des Microgrids den Vorteil besitzen, dass er sich um den Betrieb und die Pflege des Cloud-Computersystems nicht selbst kümmern muss, sondern diese Aufgaben dem Betreiber des Cloud-Computersystems übertragen hat, die dieser als Dienstleistung anbietet.

Hinsichtlich der Teil-Betriebspläne kann zudem konkret vorgesehen sein, dass diese zumindest jeweils eine Angabe über einen Einschaltzustand und einen Sollwert für die Leistungsabgabe bzw. den Leistungsbezug des jeweiligen Energieerzeugers bzw. Energieverbrauchers umfassen.

Gemäß einer weiteren Ausführungsform kann hinsichtlich der Teil-Betriebspläne zusätzlich vorgesehen sein, dass diese auch eine Angabe über die Kosten umfassen, die bei der Energieerzeugung bzw. dem Energieverbrauch des jeweiligen Energieerzeugers bzw. Energieverbrauchers anfallen. Kosten, die bei der Energieerzeugung anfallen, sind insbesondere Betriebskosten (inklusive etwaigen Brennstoffkosten) und Bereitstellungskosten der jeweiligen Anlage. Kosten, die beim Energieverbrauch anfallen, sind beispielsweise Betriebs- und Bereitstellungskosten eines Energiespeichers, aber auch Zahlungen, die beim Überschreiten einer vertraglich vereinbarten (z.B. mit einem Betreiber eines Verteilnetzes) Leistungsgrenze geleistet werden müssen. Außerdem können Vebrauchskosten dann relevant werden, wenn der Betreiber des Microgrids einen Bezugsvertrag mit einem Betreiber eines übergeordneten Verteilnetzes hat.

Gemäß einer weiteren vorteilhaften Ausführungsform des erfindungsgemäßen Verfahrens kann konkret vorgesehen sein, dass bei einer Leistungsbilanz, die kleiner als oder gleich der positiven bzw. negativen Reserveleistung ist, die jeweils eingeschalteten Energieerzeuger zur Anpassung ihrer einzuspeisenden Leistung entsprechend angesteuert werden, und bei einer Leistungsbilanz, die größer als die positive bzw. negative Reserveleistung ist, der Einschaltzustand zumindest eines Energieerzeugers verändert wird.

Bei dieser Ausführungsform wird durch eine relativ einfache Regelanweisung ein Betrieb des Microgrids ermöglicht. Solange ein Ausgleich der Leistungsbilanz durch die Ansteuerung von aktiven Energieerzeugern innerhalb der Reserveleistung erfolgen kann, wird dies durchgeführt. Wenn die positive Reserveleistung nicht mehr ausreicht, wird ein weiterer (bisher ausgeschalteter) Energieerzeuger in Betrieb genommen. Wenn die negative Reserveleistung nicht mehr ausreicht (es wird zu viel Leistung ins Microgrid eingespeist), wird ein aktiver Energieerzeuger ausgeschaltet. Diese Schritte erfolgen so lange, bis eine ausgeglichene Leistungsbilanz vorliegt.

Die Reihenfolge, in der die Energieerzeuger ein- bzw. ausgeschaltet werden, kann durch Optimierungsgrößen bestimmt werden. Beispielsweise können zunächst diejenigen Erzeuger eingeschaltet werden, deren Betrieb die geringsten Kosten bewirkt, so dass immer derjenige inaktive Energieerzeuger eingeschaltet wird, der die geringsten Erzeugungskosten mit sich bringt. Im umgekehrten Fall können beim Ausschalten zunächst diejenigen Energieerzeuger mit den höchsten Energieerzeugungskosten außer Betrieb genommen werden usw. Eine weitere Optimierungsgröße kann z.B. ein CO₂-Ausstoß des jeweiligen Energieerzeugers sein.

Außerdem kann gemäß einer weiteren vorteilhaften Ausführungsform vorgesehen sein, dass für den Fall, dass bei einer Leistungsbilanz, die größer als die positive bzw. negative Reserveleistung ist, kein weiterer Energieerzeuger vorhanden ist, dessen Einschaltzustand verändert werden kann, der Einschaltzustand zumindest eines Energieverbrauchers verändert wird.

Bei dieser Ausführungsform wird dann, wenn keine Regelung durch Ein- oder Ausschalten von Energieerzeugern mehr möglich ist, Einfluss auf die Lastseite des Microgrids genommen. So werden bedarfsweise Lasten zu- oder abgeschaltet, um eine ausgeglichene Leistungsbilanz im Microgrid zu erreichen.

Eine weitere vorteilhafte Ausführungsform des erfindungsgemäßen Verfahrens sieht zudem vor, dass mittels der lokalen Steuereinrichtung im Betrieb des autarken Energieversorgungsnetzes Messwerte erfasst werden, die einen Betriebszustand der Energieerzeuger und/oder Energieverbraucher und/oder des gesamten autarken Energieversorgungsnetzes an einem Netzanschlusspunkt angeben, zumindest ein Teil der Messwerte und/oder davon abgeleitete Werte an die Recheneinrichtung übermittelt werden, und die Recheneinrichtung unter Verwendung der übertragenen Messwerte und/oder der von diesen abgeleiteten Werte einen aktualisierten Betriebsplan für das aktuelle Zeitintervall oder ein darauf folgendes Zeitintervall bestimmt.

Auf diese Weise kann der Betrieb des Microgrids adaptiv an aktuelle Veränderungen angepasst werden. So können z.B. Unstimmigkeiten in der Prognose der voraussichtlich eingespeisten Leistung ausgeglichen oder der Ausfall eines für den Betrieb des Microgrids eingeplanten Energieerzeugers kompensiert werden. Die vergleichsweise rechenintensive Anpassung der Betriebspläne, bei der zumindest teilweise eine Neuberechnung der Optimierung erfolgen muss, findet durch die Recheneinrichtung statt, so dass die lokalen Steuereinrichtungen hiervon entlastet werden.

Eine weitere vorteilhafte Ausführungsform des erfindungsgemäßen Verfahrens sieht zudem vor, dass durch die Recheneinrichtung jeweilige Betriebspläne für mehrere autarke Energieversorgungsnetze ermittelt werden, und die jeweiligen Energieerzeuger und/oder Energieverbraucher der mehreren autarken Energieversorgungsnetze entsprechend der Vorgaben des jeweiligen Betriebsplans durch die jeweilige lokale Steuereinrichtung angesteuert werden.

Bei dieser Lösung werden durch die Recheneinrichtung somit Dienste für mehrere Microgrids angeboten. Diese Microgrids können demselben oder verschiedenen Netzbetreibern zugeordnet sein. Im letztgenannten Fall ist durch geeignete Maßnahmen dafür zu sorgen dass die Datensicherheit auf der Recheneinrichtung gewährleistet wird.

Die oben genannte Aufgabe wird auch durch ein System zum Betreiben eines autarken Energieversorgungsnetzes, wobei das autarke Energieversorgungsnetz eine Anzahl von Energieerzeugern und eine Anzahl von Energieverbrauchern aufweist, mit einer lokalen Steuereinrichtung die zur Ansteuerung der Energieerzeuger und/oder der Energieverbraucher eingerichtet ist; und einer der lokalen Steuereinrichtung übergeordneten Recheneinrichtung, die einen Datenspeicher zum Bereitstellen von Modelldaten des autarken Energieversorgungsnetzes, die die jeweiligen Energieerzeuger sowie deren Betriebsparameter angeben, aufweist; wobei die Recheneinrichtung zum Ermitteln eines Betriebsplans für das autarke Energieversorgungsnetz unter Verwendung der Modelldaten und zum Übermitteln des Betriebsplans an die lokale Steuereinrichtung eingerichtet ist, wobei der Betriebsplan den Betriebszustand des autarken Energieversorgungsnetzes während eines bestimmten Zeitintervalls angibt; und wobei die lokale Steuereinrichtung zum Ansteuern der Energieerzeuger und/oder der Energieverbraucher entsprechend der Vorgaben des Betriebsplans eingerichtet ist.

Erfindungsgemäß ist vorgesehen, dass der Betriebsplan für das jeweilige Zeitintervall einen Gesamt-Betriebsplan, der eine elektrische Leistung an einen Netzanschlusspunkt des autarken Energieversorgungsnetzes angibt, und Teil-Betriebspläne für die Energieerzeuger und/oder Energieverbraucher des autarken Energieversorgungsnetzes umfasst; und die lokale Steuereinrichtung dazu eingerichtet ist, im Betrieb des autarken Energieversorgungsnetzes die aktuelle Leistungsbilanz des autarken Energieversorgungsnetzes als Differenz zwischen in das autarke Energieversorgungsnetz eingespeister und aus diesem entnommener Leistung zu bilden, eine positive Reserveleistung und eine negative Reserveleistung des autarken Energieversorgungsnetzes zu bestimmen, die aktuelle Leistungsbilanz mit der positiven und der negativen Reserveleistung zu vergleichen und das Ergebnis des Vergleichs zum Ansteuern der Energieerzeuger heranzuziehen, wobei die positive Reserveleistung als Differenz aus der maximal möglichen Leistungsabgabe und der tatsächlichen aktuellen Leistungsabgabe aller aktiven Energieerzeuger und die negative Reserveleitung als Differenz aus der tatsächlichen aktuellen Leistungsabgabe und der minimal möglichen Leistungsabgabe aller aktiven Energieerzeuger bestimmt werden.

Konkret kann hinsichtlich des erfindungsgemäßen Systems vorgesehen sein, dass das System zum Betreiben mehrerer autarker Energieversorgungsnetzes eingerichtet ist, und den jeweiligen autarken Energieversorgungsnetzen jeweils eigene lokale Steuereinrichtungen zugeordnet sind, die mit der Recheneinrichtung in Verbindung stehen.

Hinsichtlich des erfindungsgemäßen Systems gelten alle zu dem erfindungsgemäßen Verfahren voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Systems wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und des erfindungsgemäßen Systems in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: eine schematische Übersicht eines Energieversorgungssystems mit mehreren an ein Verteilnetz angeschlossenen autarken Energieversorgungsnetzen (Microgrids);
- Figur 2: eine schematische Darstellung zweier Microgrids, die mittels lokaler Steuereinrichtungen und einer übergeordneten Recheneinrichtung betrieben werden;
- Figur 3: eine schematische Darstellung einer lokalen Steuereinrichtung;
- Figur 4: eine schematische Darstellung der Recheneinrichtung;
- Figur 5: ein erstes Säulendiagramm zur Erläuterung der Betriebsweise eines Microgrids mit der lokalen Steuereinrichtung;
- Figur 6: ein zweites Säulendiagramm zur Erläuterung der Betriebsweise eines Microgrids mit der lokalen Steuereinrichtung; und
- Figur 7: ein drittes Säulendiagramm zur Erläuterung der Betriebsweise eines Microgrids mit der lokalen Steuereinrichtung.

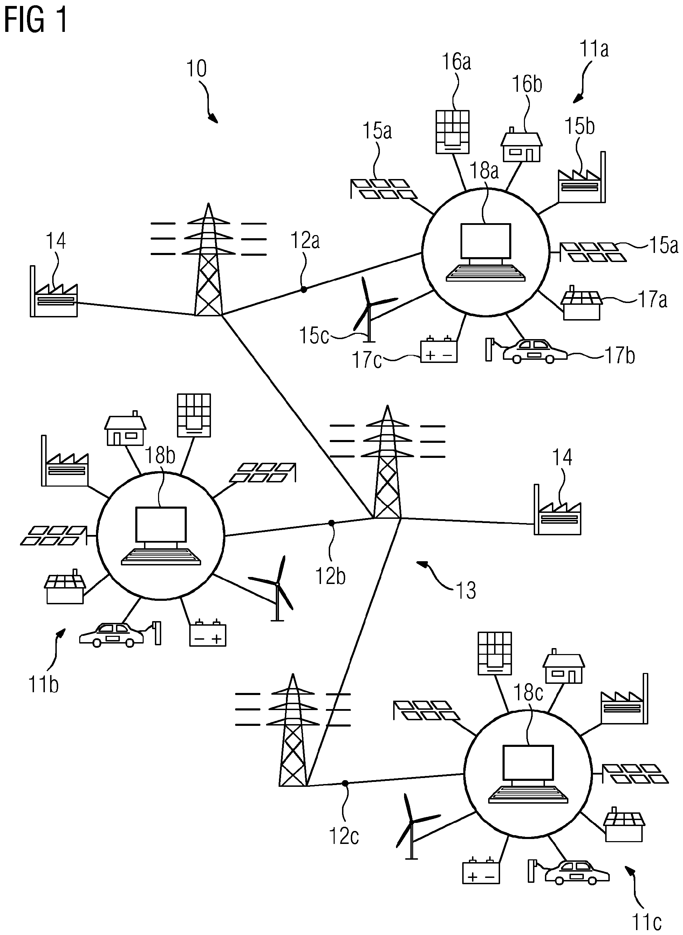

Figur 1 zeigt in höchstschematischer Darstellung ein Energieversorgungssystem 10, bei dem mehrere autarke Energieversorgungsnetze (Microgrids) 11a-c an jeweiligen Netzanschlussstellen 12a-c mit einem Verteilnetz 13 gekoppelt sind. An das Verteilnetz 13 sind Energieerzeuger in Form von Kraftwerken 14 angeschlossen, die eine Grundversorgung mit elektrischer Energie sicherstellen.

Die Microgrids selbst umfassen eine Anzahl von Energieerzeugern 15a-c und Energieverbrauchern 16a-b, die in Figur 1 lediglich beispielhaft angedeutet sind. Konkret können beispielsweise Energieerzeuger in Form von Photovoltaikanlagen (Energieerzeuger 15a), Kleinkraftwerken, z.B. Blockheizkraftwerke, Biogasanlagen, Mikroturbinen etc. (Energieerzeuger 15b) oder Windkraftanlagen (Energieerzeuger 15c) sowie Energieverbraucher in Form von Büro- bzw. Gewerbegebäuden (Energieverbraucher 16a) oder Wohnhäusern (Energieverbraucher 16b) vorhanden sein. Darüber hinaus können auch sogenannte "Prosumer" 17a-c (Zusammensetzung aus Producer und Consumer) vorhanden sein, die je nach Betriebsweise sowohl elektrische Energie erzeugen als auch aufnehmen können. Darunter fallen beispielsweise Gebäude mit eigenen Stromerzeugungsmodulen, z.B. Wohnhäuser mit Photovoltaikmodulen (Prosumer 17a), Elektrofahrzeuge mit elektrischem Energiespeicher (Prosumer 17b) und stationäre elektrische Energiespeicher, z.B. Batterieanlagen (Prosumer 17c). Solche Prosumer werden im Zusammenhang mit dieser Beschreibung je nach ihrer Betriebsweise als Energieerzeuger bzw. Energieverbraucher angesehen und bezeichnet. So wird beispielsweise ein stationärer Speicher, während er elektrische Energie abgibt, als Energieerzeuger, und während er elektrische Energie aufnimmt, als Energieverbraucher angesehen.

Die in Figur 1 dargestellten Energieerzeuger und Energieverbraucher sollen lediglich beispielhaft zu verstehen sein. Es können selbstverständlich Microgrids mit beliebiger Anzahl und Zusammensetzung von Energieerzeugern und -verbrauchern vorliegen.

Im Unterschied zur Darstellung in Figur 1 kann ein autarkes Energieversorgungsnetz/Microgrid auch ohne Ankopplung an ein Verteilnetz betrieben werden. Dies ist beispielsweise bei Inseln oder in abgelegenen Gebieten der Fall.

Zur Steuerung des Betriebs der Microgrids sind lokale Steuereinrichtungen 18a-c vorgesehen, die in Figur 1 ebenfalls nur symbolhaft angedeutet sind. Mit diesen lokalen Steuereinrichtungen werden entsprechend eines Betriebsplans, der jeweils für ein bestimmtes Zeitintervall (z.B. von einer Dauer von 15 Minuten) einen Betriebszustand des Microgrids vorgibt, die im Microgrid vorhandenen Energieerzeuger und/oder -verbraucher so angesteuert, dass der Betrieb des Microgrids einer bestimmten Regelstrategie entspricht. Beispielsweise kann die Regelstrategie darin bestehen, eine kostenoptimierte Betriebsweise des Microgrids herzustellen. Hierbei müssen die jeweiligen Energieerzeugungskosten, die mit den jeweiligen Energieerzeugern verbunden sind (z.B. aktuelle Brennstoffpreise, Betriebskosten einer Windkraftanlage etc.), sowie ein etwaiger Strompreis bei der Stromentnahme aus dem bzw. Stromeinspeisung in das Verteilnetz 13 berücksichtigt werden. Eine andere Regelstrategie kann auf eine Betriebsweise mit möglichst geringem CO₂-Ausstoß oder eine komplett autarke Betriebsweise (Inselbetrieb) gerichtet sein.

Zur Planung und Optimierung des Betriebs eines Microgrids ist eine Prognose der jeweils in dem betrachteten Zeitintervall in dem Microgrid erzeugten und aus dem Microgrid entnommenen elektrischen Leistung notwendig. Hierfür muss eine Projektierung und Parametrierung sowie eine Modellierung der jeweils vorhandenen Energieerzeuger und -verbraucher stattfinden. Diese Vorgänge erfordern ein hohes technisches Verständnis und Datenverarbeitungseinrichtungen mit hoher Rechenkapazität. Beides ist für den singulären lokalen Betrieb eines einzelnen Microgrids hinsichtlich des Kosten-Nutzen-Verhältnisses nicht effizient.

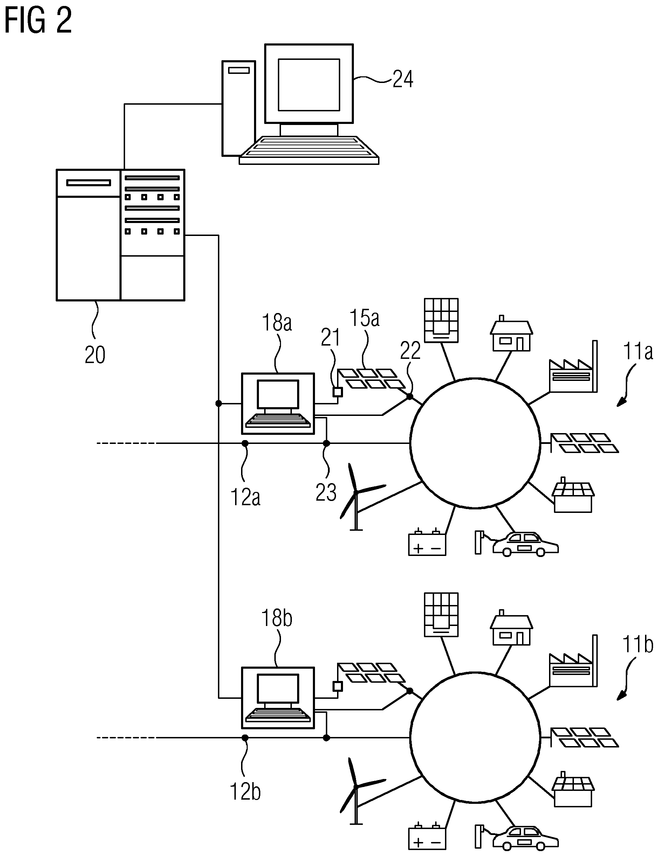

Daher wird vorliegend zum Betrieb der Microgrids eine Zweiteilung der Automatisierungslösung vorgeschlagen, wie sie in Figur 2 schematisch angedeutet ist. Figur 2 zeigt hierzu einen Teilbereich des Energieversorgungssystems 10 aus Figur 1 mit den Microgrids 11a und 11b, die an Netzanschlussstellen 12a,b mit dem in Figur 2 nicht weiter gezeigten Verteilnetz gekoppelt sind. Die lokale Steuereinrichtung 18a,b des jeweiligen Microgrids 11a,b steht einerseits in geeigneter Weise mit den Energieerzeugern bzw. -verbrauchern des jeweiligen Microgrids 11a,b sowie andererseits mit einer übergeordneten Recheneinrichtung 20 in Verbindung.

Die Verbindung mit den Energieerzeugern bzw. -verbrauchern dient dazu, Steuersignale an den jeweiligen Energieerzeuger bzw. -verbraucher zu senden, um dessen Betriebszustand entsprechend des Betriebsplans für das jeweilige Zeitintervall anzupassen. Außerdem ist die jeweilige lokale Steuereinrichtung 18a,b mit Messsensoren verbunden, die dazu dienen, die Einspeisung bzw. den Bezug elektrischer Energie durch den jeweiligen Energieerzeuger bzw. -verbraucher sowie im Bereich der Netzanschlussstelle 12a,b zu messen. Auf diese Weise werden der lokalen Steuereinrichtung jeweils aktuelle Betriebsdaten des Microgrids zur Verfügung gestellt. Um die Übersichtlichkeit zu gewährleisten, ist in Figur 2 lediglich beispielhaft und stellvertretend für alle übrigen Verbindungen eine Verbindung der lokalen Steuereinrichtung 18a,b mit dem Energieerzeuger 15a dargestellt. Dabei umfasst die Verbindung eine erste Verbindung zu einem Steuermodul 21 des Energieerzeugers 21, um durch Steuersignale den Betriebszustand des Energieerzeugers zu beeinflussen, sowie eine zweite Verbindung mit einem nur schematisch angedeuteten Messsensor 22 zur Erfassung der von dem Energieerzeuger 15a eingespeisten Leistung (beispielsweise durch geeignete Messung von Strom- und Spannung an der Messstelle des Messsensors). Darüber hinaus ist eine Verbindung zu einem weiteren Messsensor 23 gezeigt, mit dem die Leistung im Bereich der Netzanschlussstelle 12a,b gemessen wird. Die Verbindungen zwischen der jeweiligen lokalen Steuereinrichtung 18a,b und den einzelnen Energieerzeugern bzw. -verbrauchern kann in beliebiger geeigneter Form (z.B. drahtlos oder drahtgebunden) ausgeführt sein und auf einem oder mehreren Kommunikationsprotokollen (z.B. gemäß IEC 61850, IEC 61870-5-104, DNP3(i), XMPP, Modbus TCP/RTU) beruhen.

Rechenintensive Funktionen sowie die Projektierung und Parametrierung des jeweiligen Microgrids sind in der Recheneinrichtung 20 gebündelt, bei der es sich beispielsweise um ein Cloud-Computersystem handeln kann. Zur Eingabe von Parametern und Modelldaten steht die Recheneinrichtung 20 mit einem Dateneditor 24 in Verbindung, der als separate Datenverarbeitungseinrichtung (z.B. eine Workstation) ausgeführt oder integraler Bestandteil der Recheneinrichtung 20 selbst sein kann.

Durch die Zweiteilung des Automatisierungssystems werden Prozesse, die ein hohes Expertenwissen, großen manuellen Aufwand und/oder eine hohe Rechenkapazität erfordern, von der jeweiligen lokalen Steuereinrichtung 18a,b auf die Recheneinrichtung 20 verlagert und so die Effizienz des Gesamtsystems gesteigert. Auf diese Weise können als lokale Steuereinrichtungen 18a,b einfachere und damit kostengünstigere Geräte verwendet werden; außerdem fällt deutlich weniger lokaler Personalaufwand für die Konfiguration und den Betrieb des jeweiligen Microgrids an. Die Verbindung zwischen der jeweiligen Steuereinrichtung 18a,b und der Recheneinrichtung 20 kann in beliebiger geeigneter Form, z.B. als drahtgebundene Ethernetverbindung, ausgeführt sein. Es können beliebige Kommunikationsprotokolle eingesetzt werden, beispielsweise ein in dem Standard IEC 61850 definiertes Protokoll.

Die Recheneinrichtung 20 kann ebenfalls dem Betreiber eines oder aller Microgrids 11a,b zugeordnet sein. Alternativ dazu kann die Recheneinrichtung 20 jedoch auch von einem Diensteanbieter betrieben werden, der über Expertenwissen im Bereich der Steuerung von Microgrids verfügt und die Parametrierung und Berechnung der jeweiligen optimierten Betriebspläne als Service für den jeweiligen Betreiber eines Microgrids anbietet.

Konkret ist das System zum Betreiben eines Microgrids wie folgt aufgebaut und wird wie folgt betrieben:
Die lokale Steuereinrichtung 18a,b übernimmt wie oben beschrieben die Kommunikation zum einem mit den jeweiligen Energieerzeugern bzw. -verbrauchern und zum anderen mit der Recheneinrichtung 20.

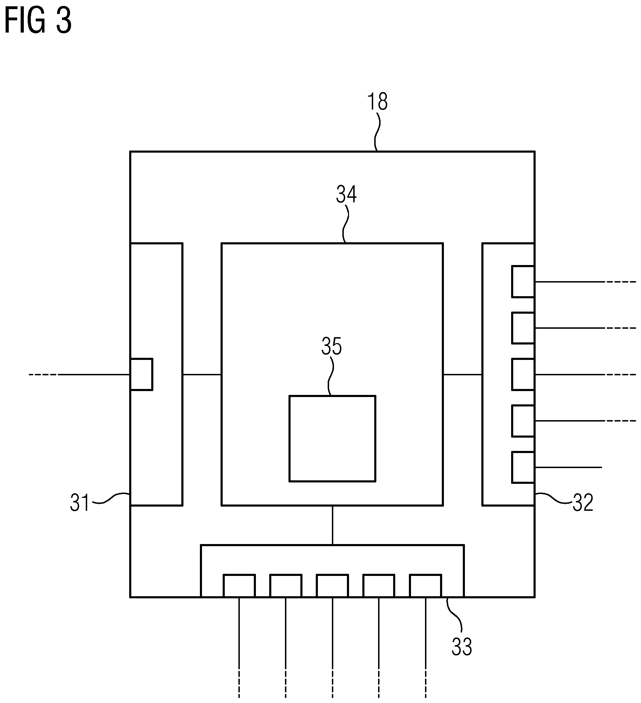

Dazu umfasst die lokale Steuereinrichtung 18 wie in Figur 3 gezeigt eine erste Kommunikationsschnittstelle 31 für eine Kommunikation mit der Recheneinrichtung 20 sowie eine zweite Kommunikationsschnittstelle 32 zur Übertragung von Steuersignalen an die jeweiligen Energieerzeuger bzw. -verbraucher. Eine Eingangs-/Ausgangsschnittstelle 33 dient darüber hinaus zur Erfassung von Messwerten der jeweiligen Messsensoren. Dabei können die Messwerte per Festverdrahtung an die Eingangs-/Ausgangsschnittstelle 33 der Steuereinrichtung 18 übertragen werden oder in einem zwischengelagerten Prozess in ein Telegramm umgesetzt und als Telegramminhalt an die Eingangs-/Ausgangsschnittstelle 33 übermittelt werden. Die Eingangs-/Ausgangsschnittstelle 33 ist entsprechend als Messwerterfassungseinrichtung oder als Kommunikationseinrichtung auszubilden. Außerdem umfasst die Steuereinrichtung 18 ein Controllermodul, das die für die Ansteuerung der Energieerzeuger bzw. -verbraucher notwendigen Funktionen durchführt. Bei dem Controllermodul kann es sich z.B. um einen Mikroprozessor, einen ASIC oder einen FPGA oder ähnliches handeln.

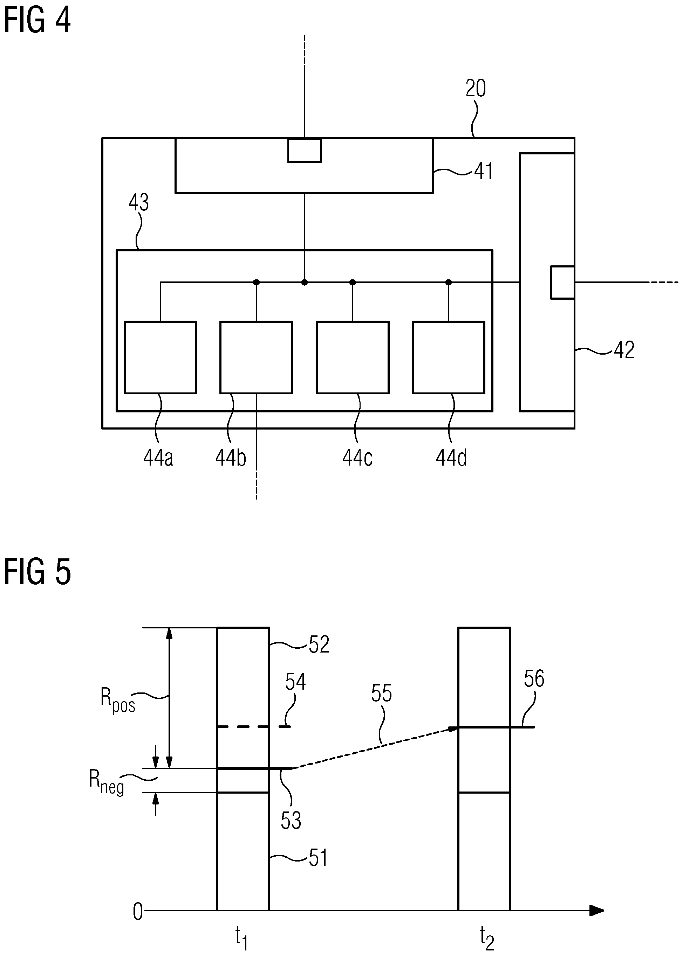

Die Recheneinrichtung 20 erstellt auf der Basis von Heuristiken oder mathematischen Optimierungsverfahren Betriebspläne für die Energieerzeuger bzw. -verbraucher des jeweiligen Microgrids, die einen stabilen Systemzustand des Microgrids gewährleisten. Die Recheneinrichtung 20 ist wie in Figur 4 gezeigt ausgebildet. Gemäß Figur 4 umfasst die Recheneinrichtung 20 eine Schnittstelle 41 zum Datenaustausch mit dem Dateneditor 24 (vgl. Figur 2) sowie eine Kommunikationsschnittstelle 42 zur Verbindung mit einer oder mehreren lokalen Steuereinrichtungen 18. Darüber hinaus weist die Recheneinrichtung einen Controller 43 auf, der zur Durchführung von Funktionsmodulen 44a-d eingerichtet ist.

Die Darstellung der Recheneinrichtung 20 in Figur 4 ist rein funktional anzusehen; wie oben bereits erwähnt, kann es sich bei der Recheneinrichtung entweder um eine einzelne Datenverarbeitungseinrichtung oder um einen Rechnerverbund, beispielsweise in Form eines Cloud-Computersystems, handeln, der die in Figur 2 gezeigten Elemente und Funktionen bereitstellt.

Über den mit der Schnittstelle 41 verbundenen Dateneditor können die wesentlichen Modelldaten der Energieerzeuger bzw. -verbraucher parametriert werden. Zu diesen Modelldaten gehören die Energieerzeuger bzw. -verbraucher und deren Betriebsparameter angebende Daten, z.B. minimale und maximale Erzeugungsleistungen der Energieerzeuger, Wirkungsgradkennlinien, Brennstoffpreise oder Batteriekapazitäten. Diese Modelldaten werden im Funktionsmodul 44a, bei dem es sich um ein Datenspeichermodul der Recheneinrichtung 20 handelt, gespeichert; eine für die jeweilige lokale Steuereinrichtung relevante Teilmenge wird an die lokalen Steuereinrichtung 18 weitergegeben und in einem lokalen Datenspeichermodul 35 (vgl. Figur 3) abgelegt.

Bei dem Funktionsmodul 44b handelt es sich um ein Modul zur Bereitstellung von Wetterprognosen, welches je nach Aufbauort des Microgrids geeignete Wetterdienste abfragt, um lokale Prognosen von Wettergrößen wie Windgeschwindigkeit, Windrichtung, solare Einstrahlung etc. zu erhalten. Die abgefragten Wetterdienste können von der Recheneinrichtung 20 selbst oder von externen Anbietern (Wetterdiensteanbieter) bereitgestellt werden.

Bei dem Funktionsmodul 44c handelt es sich um ein Modul zur Berechnung von voraussichtlichen Einspeiseleistungen derjenigen Energieerzeuger, deren Energieerzeugungsleistung von der jeweils aktuellen Wetterlage abhängig ist (z.B. Photovoltaikanlagen, Windkraftanlagen etc.). Zur Berechnung der voraussichtlichen Einspeiseleistung werden zumindest relevante Teile der von dem Funktionsmodul 44b bereitgestellten Wetterinformationen sowie zumindest Teile der in dem Funktionsmodul 44a hinterlegten Modelldaten (z.B. Wirkungsgradkennlinien) verwendet.

Bei dem Funktionsmodul 44d handelt es sich um ein Modul zur Berechnung von Betriebsplänen der einzelnen Microgrids. Dabei können die Betriebspläne für das jeweilige Zeitintervall einerseits Teil-Betriebspläne der einzelnen Energieerzeuger und andererseits einen Gesamt-Betriebsplan umfassen, der den Leistungsfluss am Netzanschlusspunkt angibt. Das Funktionsmodul 44d verwendet eine mathematische Einsatzoptimierung, z.B. auf der Basis der gemischt-ganzzahlig-linearen Programmierung und optimiert den Betrieb des Microgrids hinsichtlich vorgegebener Parameter, z.B. den Leistungsaustausch des Microgrids mit dem Verteilnetz, die Betriebskosten oder den CO₂-Ausstoß.

Die Recheneinrichtung 20 und die lokale Steuereinrichtung 18 des jeweiligen Microgrids arbeiten wie folgt zusammen.

Vor Inbetriebnahme des Microgrids findet einen Dateneingabe zur Projektierung und Parametrierung des jeweiligen Microgrids statt. Dazu gibt der Anwender zunächst die Modelldaten des Microgrids über den Dateneditor 24 ein. Der Dateneditor 24 generiert aus den eingegeben Daten Datenmodelle für die mathematische Einsatzoptimierung. Die Modelldaten sowie die hieraus abgeleiteten Datenmodelle werden im Funktionsmodul 44a abgespeichert.

Die Recheneinrichtung 20 sendet darüber hinaus relevante Modelldaten an die die jeweilige lokale Steuereinrichtung. Als relevant werden solche Modelldaten angesehen, die für den Betrieb des jeweiligen Microgrids 11 durch die Steuereinrichtung 18 notwendig bzw. vorteilhaft sind und sich auf die in dem jeweiligen Microgrid 11 vorhandenen Energieerzeuger bzw. -verbraucher beziehen.

Im Betrieb ruft die Recheneinrichtung 20 in zyklischen Abständen, z.B. einmal am Tag, aktuelle Wetterprognosen von den Wetterdiensten ab und hinterlegt sie im Funktionsmodul 44b. Mit Hilfe dieser Wetterprognosen berechnet das Funktionsmodule 44c die voraussichtliche Energieeinspeisung für jeden Energieerzeuger innerhalb des zu betrachtenden Zeitintervalls, übergibt diese Information an das Funktionsmodul 44d, das unter Verwendung dieser Information einen Betriebsplan für das jeweilige Microgrid berechnet, und/oder sendet sie direkt an die lokale Steuereinrichtung. Hierzu findet eine entsprechende Optimierung des Betriebs des Microgrids entsprechend der Optimierungsvorgaben statt. Dabei werden mit dem Funktionsbaustein 44d Betriebspläne jeweils für aufeinander folgende Zeitintervalle von z.B. 15 Minuten Dauer berechnet.

Schließlich sendet die Recheneinrichtung 20 den Betriebsplan für das jeweilige Zeitintervall an die entsprechende lokale Steuereinrichtung. Der Betriebsplan umfasst einen Gesamt-Betriebsplan (Leitungsfluss am Netzanschlusspunkt, bei reinen Inselnetzen ist dieser immer Null) sowie die Teil-Betriebspläne der jeweiligen Energieerzeuger.

Diese Teil-Betriebspläne enthalten die folgenden Informationen für jedes Zeitintervall:
- Einschaltzustand des Energieerzeugers (ein/aus);
- Sollwert der Leistungsabgabe;
- ggf. Schattenpreise für Erzeugung/Verbrauch.

Diese Schattenpreise werden, z.B. von dem Funktionsmodul 44d, wie folgt bestimmt:
- Bei Erzeugungsanlagen als Verhältnis von den Betriebskostenveränderungen zu den Leistungsänderungen um den Arbeitspunkt;
- bei Energiespeichern als durchschnittliche Erzeugungskosten für diejenige elektrische Energie, die beim Laden des Speichers eingesetzt worden ist;
- bei Verbrauchern als fiktiv angenommener Preis, der die Rangfolge beim Ausschalten vorgibt (Verbraucher mit dem höchsten Preis werden zuerst ausgeschaltet, solche mit dem niedrigsten Preis zuletzt; die Preise können vom Betreiber des Microgrids nach bestimmten Kriterien, z.B. Wichtigkeit des Verbrauchers, festgelegt werden).

Die lokale Steuereinrichtung 18 steuert unter Verwendung der übertragenen Betriebspläne für das jeweilige Zeitintervall die Energieerzeuger wie nachfolgend erläutert an.

Die lokale Steuereinrichtung erfasst wie oben beschrieben Messwerte, die die jeweilige Leistungseinspeisung der Energieerzeuger bzw. Leistungsentnahme der Energieverbraucher beschreiben und bildet daraus die Leistungsbilanz des Microgrids in Form der Differenz zwischen Einspeisung und Entnahme. Alternativ kann auch der Leistungsfluss am Netzanschlusspunkt gemessen werden, der der Leistungsbilanz entspricht.

Außerdem bestimmt die lokale Steuereinrichtung eine positive und eine negative Reserveleistung. Die positive Reserveleistung Rₚₒₛ wird hierbei als Differenz aus der maximal möglichen Leistungsabgabe und der tatsächlichen aktuellen Leistungsabgabe aller aktiven (eingeschalteten) Energieerzeuger bestimmt. Entsprechend wird die negative Reserveleistung R_{neg} als Differenz aus der tatsächlichen aktuellen Leistungsabgabe und der minimal möglichen Leistungsabgabe aller aktiven Energieerzeuger bestimmt.

Anhand der Größen "Leistungsbilanz", "positive Reserveleistung" und "negative Reserveleistung" sowie der Vorgaben aus dem Betriebsplan findet eine Echtzeitregelung des Microgrids statt. Dabei können Abweichungen vom Betriebsplan, die sich z.B. aus Abweichungen zu den prognostizierten Wetterdaten und damit Einspeisemengen ergeben, leicht berücksichtigt werden.

Entsprechend den Vorgaben aus dem Betriebsplan werden die jeweiligen Energieerzeuger ein- bzw. ausgeschaltet, wenn der betreffende Einschaltzustand gemäß Betriebsplan in dem zur aktuellen Uhrzeit passenden Zeitintervall ein bzw. aus ist; außerdem wird ggf. der Sollwert der Leistungsabgabe als Regelvorgabe an den jeweiligen Energieerzeuger übertragen.

Wenn im entsprechend dem Betriebsplan ausgeführten Betrieb des Microgrids die Leistungsbilanz kleiner als der Betrag der die positiven/negativen Reserveleistung ist, wird die Leistungsabgabe der Energieerzeuger gemäß der geforderten Netzfrequenz geregelt. Dies wird am Beispiel der Figur 5 erläutert. Figur 5 zeigt ein Säulendiagramm, mit dem die Leistungskontingente der aktuell eingeschalteten Energieerzeuger zu zwei verschiedenen Regelzeitpunkten t₁, t₂ werden. Zum Zeitpunkt t₁ steht eine erste Teilsäule 51 steht für ein Leistungskontingent eines ersten eingeschalteten Energieerzeugers, eine zweite Teilsäule 52 steht entsprechend für das Leistungskontingent eines zweiten Energieerzeugers.

Mit einer Linie 53 wird die aktuelle gemäß Betriebsplan eingestellte Leistungsabgabe der beiden Energieerzeuger angegeben. Man erkennt, dass der erste Energieerzeuger vollständig, der zweite zum Teil ausgelastet ist. Mit einer gestrichelten Linie 54 wird der gemessene oder berechnete Wert der Leistungsbilanz angegeben; man erkennt, dass zum Zeitpunkt t₁ mehr Leistung benötigt als durch die aktuelle Vorgabe des Betriebsplans eingespeist wird. Bei vorhandener Kopplung mit dem Verteilnetz wird diese Leistung z.B. durch zusätzlichen Bezug ausgeglichen. Um das Microgrid möglichst autark und effizient weiterzubetreiben, wird von der lokalen Steuereinrichtung als Reaktion auf die Differenz zwischen der Leistungsbilanz und der tatsächlichen Einspeisung der zweite Energieerzeuger zur Abgabe einer höheren Leistung angesteuert. Dies ist in Figur 5 durch den Pfeil 55 angedeutet. Zum Regelzeitpunkt t₂ ist die Leistungsabgabe entsprechend erreicht (siehe Linie 56) und das Microgrid kann in diesem Betriebszustand weiter betrieben werden, ohne zusätzliche Energieerzeuger in Betrieb zu nehmen. Dies ist möglich, da die Leistungsbilanz zwar eine positive Abweichung vom Istzustand aufweist, jedoch kleiner als die positive Reserveleistung Rₚₒₛ ist, die in Figur 5 beispielhaft eingetragen ist (lediglich beispielhaft ist auch die negative Reserveleistung R_{neg} in Figur 5 eingetragen).

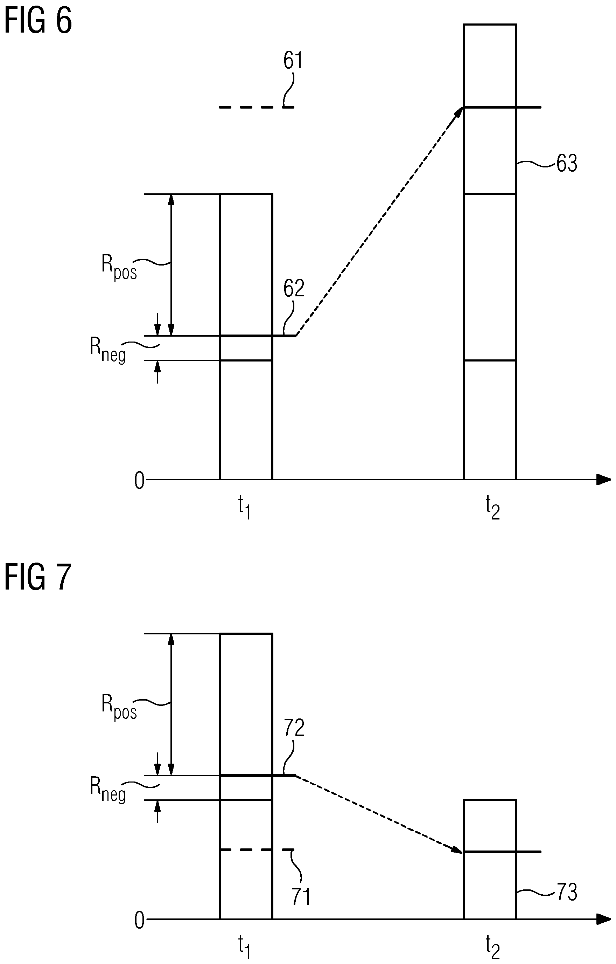

Eine andere Situation ist in Figur 6 beispielhaft dargestellt. Hier liegt die Leistungsbilanz (Linie 61) über der positiven Reserveleistung Rₚₒₛ, die sich aus dem aktuellen Betriebszustand (Linie 62) und den Leistungskontingenten der eingeschalteten Energieerzeuger ergibt. Zur Anpassung wird von der Steuereinrichtung ein weiterer Energieerzeuger in Betrieb genommen, dessen Leistungskontingent als Teilsäule 63 im Regelzeitpunkt t₂ dargestellt ist. Bei der Auswahl der einzuschaltenden Energieerzeuger können beispielsweise deren Schattenpreise berücksichtigt werden. So werden immer zunächst die Energieerzeuger mit den günstigsten und erst später bei Bedarf die mit den teureren Energieerzeugungskosten in Betrieb genommen.

Eine weitere Situation ist in Figur 7 beispielhaft dargestellt. Hier liegt die Leistungsbilanz (Linie 71) unter der negativen Reserveleistung R_{neg}, die sich aus dem aktuellen Betriebszustand (Linie 72) und den Leistungskontingenten der eingeschalteten Energieerzeuger ergibt. Zur Anpassung wird von der Steuereinrichtung einer der zum Zeitpunkt t₁ aktiven Energieerzeuger außer Betrieb genommen, so dass nur noch ein Energieerzeuger mit einem Leistungskontingent eingeschaltet bleibt, das als Teilsäule 73 im Regelzeitpunkt t₂ dargestellt ist. Bei der Auswahl der einzuschaltenden Energieerzeuger können beispielsweise deren Schattenpreise berücksichtigt werden. Bei der Auswahl der auszuschaltenden Energieerzeuger können ebenfalls beispielsweise deren Schattenpreise berücksichtigt werden. So werden immer zunächst die Energieerzeuger mit den teureren und erst später bei Bedarf die mit den niedrigen Energieerzeugungskosten außer Betrieb genommen.

Falls schließlich die ermittelte Leistungsbilanz größer ist als die positive bzw. negative Reserveleistung und die berechnete Erzeugungslücke auch durch das Ein- bzw. Ausschalten von Energieerzeugern nicht geschlossen werden kann, geht das Microgrid in einen Notbetrieb über. Dabei werden, wenn die Differenz zwischen eingespeister Leistung und entnommener Leistung positiv ist, so lange die Erzeugungsanlagen / Batterien mit den höchsten Schattenpreisen ausgeschaltet, bis die Differenz wieder im Regelband liegt, bzw. es werden wenn möglich Verbraucher eingeschaltet. Wenn die Differenz zwischen eingespeister Leistung und entnommener Leistung negativ ist, werden so lange die Verbraucher / Batterien mit den niedrigsten Schattenpreisen ausgeschaltet, bis die Differenz wieder im Regelband liegt.

Die Messwerte der Energieerzeuger bzw. am Netzanschlusspunkt werden in zyklischen Abständen, z.B. stündlich, an die Recheneinrichtung gesendet und dort archiviert. Zusätzlich wird eine erneute Einsatzoptimierung angestoßen, die für den verbleibenden Zeitraum der Optimierungsperiode und/oder weitere Zeiträume eine erneue Rechnung anstößt. Damit wird erreicht, dass zeit- und mengenintegrale Randbedingen besser eingehalten werden.

Mit dem vorgeschlagenen Automatisierungskonzept zum Betrieb von Microgrids ergeben sich unter anderem die folgenden Vorteile:
- Im Gegensatz zur heutigen komplexen lokalen Modellierung, sinken die Aufwände für das einzelne Microgrid bzw. die einzelnen Energieerzeuger drastisch, da keine umfangreichen Modelldaten mehr erfasst werden müssen.
- Die lokale Steuereinrichtung kann sehr einfach gehalten werden, sie erfordert keine aufwendige Technik und komplexe Inbetriebnahme.
- Die notwendige Parametrierung vor Ort, wird auf ein Mindestmaß reduziert.
- Aufgrund des reduzierten Modellierungsumfanges können die Anlagen schneller und ohne spezielles Fachpersonal in Betrieb genommen werden.
- Die Lösung ist aufgrund des einfachen Regelungskonzeptes kompatibel mit allen Formen von Energieerzeugern für den Einsatz in Microgrids.
- Die lokale Steuereinrichtung muss nur sporadisch mit der Recheneinrichtung kommunizieren.
Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen, wobei der Schutzumfang der Erfindung durch die nachfolgenden Ansprüche definiert wird.

## Patentansprüche

1. Verfahren zum Betreiben eines autarken Energieversorgungsnetzes (11), das eine Anzahl von Energieerzeugern (15) und eine Anzahl von Energieverbrauchern (16) aufweist, wobei eine lokale Steuereinrichtung (18) vorgesehen ist, die zur Ansteuerung der Energieerzeuger (15) und/oder der Energieverbraucher (16) eingerichtet ist, und wobei bei dem Verfahren die folgenden Schritte ausgeführt werden:
- Bereitstellen von Modelldaten des autarken Energieversorgungsnetzes (11) in einem Datenspeicher einer der lokalen Steuereinrichtung (18) übergeordneten Recheneinrichtung (20), wobei die Modelldaten die jeweiligen Energieerzeuger (15) sowie deren Betriebsparameter angeben;
- Ermitteln eines Betriebsplans für das autarke Energieversorgungsnetz (11) mit der Recheneinrichtung (20) unter Verwendung der Modelldaten, wobei der Betriebsplan den Betriebszustand des autarken Energieversorgungsnetzes (11) während eines bestimmten Zeitintervalls angibt;
- Übermitteln des Betriebsplans an die lokale Steuereinrichtung (18); und
- Ansteuern der Energieerzeuger (15) und/oder der Energieverbraucher (16) entsprechend der Vorgaben des Betriebsplans durch die lokale Steuereinrichtung (18),
**dadurch gekennzeichnet, dass**
- der Betriebsplan für das jeweilige Zeitintervall einen Gesamt-Betriebsplan, der eine elektrische Leistung an einem Netzanschlusspunkt (12) des autarken Energieversorgungsnetzes (11) angibt, und Teil-Betriebspläne für die Energieerzeuger (15) und/oder Energieverbraucher (16) des autarken Energieversorgungsnetzes (11) umfasst; und
- im Betrieb des autarken Energieversorgungsnetzes (11) von der lokalen Steuereinrichtung (18) die aktuelle Leistungsbilanz des autarken Energieversorgungsnetzes (11) als Differenz zwischen in das autarke Energieversorgungsnetz (11) eingespeister und aus diesem entnommener Leistung gebildet wird;
- von der lokalen Steuereinrichtung (18) eine positive Reserveleistung und eine negative Reserveleistung des autarken Energieversorgungsnetzes (11) bestimmt wird; wobei die positive Reserveleistung als Differenz aus der maximal möglichen Leistungsabgabe und der tatsächlichen aktuellen Leistungsabgabe aller aktiven Energieerzeuger und die negative Reserveleitung als Differenz aus der tatsächlichen aktuellen Leistungsabgabe und der minimal möglichen Leistungsabgabe aller aktiven Energieerzeuger bestimmt werden;
- die aktuelle Leistungsbilanz mit der positiven und der negativen Reserveleistung verglichen wird; und
- das Ergebnis des Vergleichs zum Ansteuern der Energieerzeuger (15) herangezogen wird.

2. Verfahren nach Anspruch 1,
**dadurch gekennzeichnet, dass**
- zum Ermitteln des Betriebsplans mittels der Recheneinrichtung (20) für das jeweilige Zeitintervall eine voraussichtliche Einspeiseleistung der jeweiligen Energieerzeuger (15) bestimmt wird; und
- die voraussichtliche Einspeiseleistung der jeweiligen Energieerzeuger (15) zum Ermitteln des Betriebsplans herangezogen wird.

3. Verfahren nach Anspruch 2,
**dadurch gekennzeichnet, dass**
- für das jeweilige Zeitintervall mittels der Recheneinrichtung (20) eine Wetterprognose für den Bereich des autarken Energieversorgungsnetzes (11) ermittelt wird; und
- für solche Energieerzeuger (15), deren Einspeiseleistung von aktuellen Wetterverhältnissen im Bereich des jeweiligen Energieerzeugers (15) abhängt, unter Verwendung solcher Informationen der Wetterprognose, die für den Betrieb des jeweiligen Energieerzeugers (15) relevant sind, sowie zumindest einem Teil der Modelldaten, die voraussichtliche Einspeiseleistung für das jeweilige Zeitintervall bestimmt wird.

4. Verfahren nach einem der vorangehenden Ansprüche,
**dadurch gekennzeichnet, dass**
- die Modelldaten als Benutzereingaben über einen von der Recheneinrichtung (20) bereitgestellten oder mit dieser verbundenen Dateneditor (24) erfasst und in dem Datenspeicher der Recheneinrichtung (20) abgespeichert werden.

5. Verfahren nach einem der vorangehenden Ansprüche,
**dadurch gekennzeichnet, dass**
- die Recheneinrichtung (20) von einer Datenverarbeitungseinrichtung gebildet wird, die als Cloud-Computersystem ausgebildet ist.

6. Verfahren nach einem der vorangehenden Ansprüche,
**dadurch gekennzeichnet, dass**
- die Teil-Betriebspläne zumindest jeweils eine Angabe über einen Einschaltzustand und einen Sollwert für die Leistungsabgabe bzw. den Leistungsbezug des jeweiligen Energieerzeugers (15) bzw. Energieverbrauchers (16) umfassen.

7. Verfahren nach Anspruch 6,
**dadurch gekennzeichnet, dass**
- die Teil-Betriebspläne auch eine Angabe über die Kosten umfassen, die bei der Energieerzeugung bzw. dem Energieverbrauch des jeweiligen Energieerzeugers (15) bzw. Energieverbrauchers (16) anfallen.

8. Verfahren nach einem der vorangehenden Ansprüche,
**dadurch gekennzeichnet, dass**
- bei einer Leistungsbilanz, die kleiner als oder gleich der positiven bzw. negativen Reserveleistung ist, die jeweils eingeschalteten Energieerzeuger (15) zur Anpassung ihrer einzuspeisenden Leistung entsprechend angesteuert werden; und
- bei einer Leistungsbilanz, die größer als die positive bzw. negative Reserveleistung ist, der Einschaltzustand zumindest eines Energieerzeugers (15) verändert wird.

9. Verfahren nach Anspruch 8,
**dadurch gekennzeichnet, dass**
- für den Fall, dass bei einer Leistungsbilanz, die größer als die positive bzw. negative Reserveleistung ist, kein weiterer Energieerzeuger (15) vorhanden ist, dessen Einschaltzustand verändert werden kann, der Einschaltzustand zumindest eines Energieverbrauchers (16) verändert wird.

10. Verfahren nach einem der vorangehenden Ansprüche,
**dadurch gekennzeichnet, dass**
- mittels der lokalen Steuereinrichtung (18) im Betrieb des autarken Energieversorgungsnetzes (11) Messwerte erfasst werden, die einen Betriebszustand der Energieerzeuger (15) und/oder Energieverbraucher (16) und/oder des gesamten autarken Energieversorgungsnetzes (11) an einem Netzanschlusspunkt (12) angeben;
- zumindest ein Teil der Messwerte und/oder davon abgeleitete Werte an die Recheneinrichtung (20) übermittelt werden; und
- die Recheneinrichtung (20) unter Verwendung der übertragenen Messwerte und/oder der von diesen abgeleiteten Werte einen aktualisierten Betriebsplan für das aktuelle Zeitintervall oder ein darauf folgendes Zeitintervall bestimmt.

11. Verfahren nach einem der vorangehenden Ansprüche,
**dadurch gekennzeichnet, dass**
- durch die Recheneinrichtung (20) jeweilige Betriebspläne für mehrere autarke Energieversorgungsnetze (11) ermittelt werden; und
- die jeweiligen Energieerzeuger (15) und/oder Energieverbraucher (16) der mehreren autarken Energieversorgungsnetze (11) entsprechend der Vorgaben des jeweiligen Betriebsplans durch die jeweilige lokale Steuereinrichtung (18) angesteuert werden.

12. System zum Betreiben eines autarken Energieversorgungsnetzes (11), wobei das autarke Energieversorgungsnetz (11) eine Anzahl von Energieerzeugern (15) und eine Anzahl von Energieverbrauchern (16) aufweist, mit
- einer lokalen Steuereinrichtung (18) die zur Ansteuerung der Energieerzeuger (15) und/oder der Energieverbraucher (16) eingerichtet ist; und
- einer der lokalen Steuereinrichtung (18) übergeordneten Recheneinrichtung (20), die einen Datenspeicher zum Bereitstellen von Modelldaten des autarken Energieversorgungsnetzes (11), die die jeweiligen Energieerzeuger (15) sowie deren Betriebsparameter angeben, aufweist; wobei
- die Recheneinrichtung (20) zum Ermitteln eines Betriebsplans für das autarke Energieversorgungsnetz (11) unter Verwendung der Modelldaten und zum Übermitteln des Betriebsplans an die lokale Steuereinrichtung (18) eingerichtet ist, wobei der Betriebsplan den Betriebszustand des autarken Energieversorgungsnetzes (11) während eines bestimmten Zeitintervalls angibt; und wobei
- die lokale Steuereinrichtung (18) zum Ansteuern der Energieerzeuger (15) und/oder der Energieverbraucher (16) entsprechend der Vorgaben des Betriebsplans eingerichtet ist;
**dadurch gekennzeichnet, dass**
- der Betriebsplan für das jeweilige Zeitintervall einen Gesamt-Betriebsplan, der eine elektrische Leistung an einen Netzanschlusspunkt (12) des autarken Energieversorgungsnetzes (11) angibt, und Teil-Betriebspläne für die Energieerzeuger (15) und/oder Energieverbraucher (16) des autarken Energieversorgungsnetzes (11) umfasst; und
- die lokale Steuereinrichtung (18) dazu eingerichtet ist, im Betrieb des autarken Energieversorgungsnetzes (11) die aktuelle Leistungsbilanz des autarken Energieversorgungsnetzes (11) als Differenz zwischen in das autarke Energieversorgungsnetz (11) eingespeister und aus diesem entnommener Leistung zu bilden, eine positive Reserveleistung und eine negative Reserveleistung des autarken Energieversorgungsnetzes (11) zu bestimmen, die aktuelle Leistungsbilanz mit der positiven und der negativen Reserveleistung zu vergleichen und das Ergebnis des Vergleichs zum Ansteuern der Energieerzeuger (15) heranzuziehen, wobei die positive Reserveleistung als Differenz aus der maximal möglichen Leistungsabgabe und der tatsächlichen aktuellen Leistungsabgabe aller aktiven Energieerzeuger und die negative Reserveleitung als Differenz aus der tatsächlichen aktuellen Leistungsabgabe und der minimal möglichen Leistungsabgabe aller aktiven Energieerzeuger bestimmt werden.

13. System nach Anspruch 12,
**dadurch gekennzeichnet, dass**
- das System zum Betreiben mehrerer autarker Energieversorgungsnetze (11) eingerichtet ist; und
- den jeweiligen autarken Energieversorgungsnetzen (11) jeweils eigene lokale Steuereinrichtungen (18) zugeordnet sind, die mit der Recheneinrichtung (20) in Verbindung stehen.

## Claims

1. Method for operating an autonomous energy supply network (11) which comprises a number of energy producers (15) and a number of energy consumers (16), wherein a local control device (18) which is adapted to drive the energy producers (15) and/or the energy consumers (16) is provided, and wherein the following steps are carried out during the method:
- provision of model data of the autonomous energy supply network (11) in a data memory of a computing device (20) superordinate to the local control device (18), the model data specifying the respective energy producers (15) and their operating parameters;
- determination of an operating plan for the autonomous energy supply network (11) with the computing device (20) by using the model data, the operating plan specifying the operating state of the autonomous energy supply network (11) during a particular time interval;
- transmission of the operating plan to the local control device (18); and
- driving of the energy producers (15) and/or the energy consumers (16) according to the specifications of the operating plan by the local control device (18),
**characterized in that**
- the operating plan for the respective time interval comprises an overall operating plan, which specifies an electrical power at a network connection point (12) of the autonomous energy supply network (11), and partial operating plans for the energy producers (15) and/or energy consumers (16) of the autonomous energy supply network (11); and
- during operation of the autonomous energy supply network (11) by the local control device (18), the current power balance of the autonomous energy supply network (11) is formed as the difference between the power delivered to the autonomous energy supply network (11) and the power drawn therefrom;
- a positive reserve power and a negative reserve power of the autonomous energy supply network (11) are determined by the local control device (18); wherein the positive reserve power is determined as the difference between the maximum possible power output and the actual current power output of all active energy producers and the negative reserve power is determined as the difference between the actual current power output and the minimum possible power output of all active energy producers;
- the current power balance is compared with the positive and the negative reserve powers; and
- the result of the comparison is used for driving the energy producers (15).

2. Method according to Claim 1,
**characterized in that**
- in order to determine the operating plan by means of the computing device (20) for the respective time interval, an expected delivery power of the respective energy producers (15) is determined; and
- the expected delivery power of the respective energy producers (15) is used in order to determine the operating plan.

3. Method according to Claim 2,
**characterized in that**
- a weather forecast for the region of the autonomous energy supply network (11) is determined for the respective time interval by means of the computing device (20); and
- for those energy producers (15) whose delivery power depends on the current weather conditions in the region of the respective energy producer (15), the expected delivery power for the respective time interval is determined by using that information of the weather forecast which is relevant for the operation of the respective energy producer (15), as well as at least some of the model data.

4. Method according to one of the preceding claims,
**characterized in that**
- the model data are acquired as user entries via a data editor (24) provided by the computing device (20) or connected thereto, and are stored in the data memory of the computing device (20).

5. Method according to one of the preceding claims,
**characterized in that**
- the computing device (20) is formed by a data processing device that is configured as a cloud computer system.

6. Method according to one of the preceding claims,
**characterized in that**
- the partial operating plans respectively comprise at least one specification of an activation state and a setpoint value for the power output or the power demand of the respective energy producer (15) or energy consumer (16).

7. Method according to Claim 6,
**characterized in that**
- the partial operating plans also comprise a specification of the costs which are incurred during the energy production or the energy consumption of the respective energy producer (15) or energy consumer (16).

8. Method according to one of the preceding claims,
**characterized in that**
- in the event of a power balance which is less than or equal to the positive or negative reserve power, the energy producers (15) respectively switched on are driven correspondingly in order to adapt their power to be delivered; and
- in the event of a power balance which is greater than the positive or negative reserve power, the activation state of at least one energy producer (15) is modified.

9. Method according to Claim 8,
**characterized in that**
- for the case in which, in the event of a power balance which is greater than the positive or negative reserve power, there is no further energy producer (15) whose activation state can be modified, the activation state of at least one energy consumer (16) is modified.

10. Method according to one of the preceding claims,
**characterized in that**
- measurement values which specify an operating state of the energy producers (15) and/or energy consumers (16) and/or of the entire autonomous energy supply network (11) at a network connection point (12) are acquired by means of the local control device (18) during operation of the autonomous energy supply network (11);
- at least some of the measurement values and/or values derived therefrom are transmitted to the computing device (20); and
- the computing device (20) determines an updated operating plan for the current time interval or a time interval subsequent thereto by using the transmitted measurement values and/or the values derived therefrom.

11. Method according to one of the preceding claims,
**characterized in that**
- respective operating plans for a plurality of autonomous energy supply networks (11) are determined by the computing device (20); and
- the respective energy producers (15) and/or energy consumers (16) of the plurality of autonomous energy supply networks (11) are driven according to the specifications of the respective operating plan by the respective local control device (18).

12. System for operating an autonomous energy supply network (11), the autonomous energy supply network (11) comprising a number of energy producers (15) and a number of energy consumers (16), having
- a local control device (18) which is adapted to drive the energy producers (15) and/or the energy consumers (16); and
- a computing device (20) which is superordinate to the local control device (18) and comprises a data memory for providing model data of the autonomous energy supply network (11), which specify the respective energy producers (15) and their operating parameters; wherein
- the computing device (20) is adapted to determine an operating plan for the autonomous energy supply network (11) by using the model data and to transmit the operating plan to the local control device (18), the operating plan specifying the operating state of the autonomous energy supply network (11) during a particular time interval; and wherein
- the local control device (18) is adapted to drive the energy producers (15) and/or the energy consumers (16) according to the specifications of the operating plan;
**characterized in that**
- the operating plan for the respective time interval comprises an overall operating plan, which specifies an electrical power at a network connection point (12) of the autonomous energy supply network (11), and partial operating plans for the energy producers (15) and/or energy consumers (16) of the autonomous energy supply network (11); and
- the local control device (18) is configured, during operation of the autonomous energy supply network (11), to form the current power balance of the autonomous energy supply network (11) as the difference between the power delivered to the autonomous energy supply network (11) and the power drawn therefrom, to determine a positive reserve power and a negative reserve power of the autonomous energy supply network (11), to compare the current power balance with the positive and the negative reserve powers and to use the result of the comparison for driving the energy producers (15), wherein the positive reserve power is determined as the difference between the maximum possible power output and the actual current power output of all active energy producers and the negative reserve power is determined as the difference between the actual current power output and the minimum possible power output of all active energy producers.

13. System according to Claim 12,
**characterized in that**
- the system is adapted to operate a plurality of autonomous energy supply networks (11); and
- the respective autonomous energy supply networks (11) are respectively assigned their own local control devices (18), which are connected to the computing device (20).

## Revendications

1. Procédé pour faire fonctionner un réseau (11) d'alimentation en énergie autarcique, qui a un certain nombre de producteurs (15) d'énergie et un certain nombre de consommateurs (16) d'énergie, dans lequel il est prévu un dispositif (18) local de commande, conçu pour commander les producteurs (15) d'énergie et/ou les consommateurs (16) d'énergie et dans lequel on exécute dans le procédé les stades suivants :
- on se procure des données de modèle du réseau (11) d'alimentation en énergie autarcique dans une mémoire de données d'un dispositif (20) d'ordinateur supérieur hiérarchiquement au dispositif (18) local de commande, les données de modèle indiquant les producteurs (15) d'énergie respectifs ainsi que leurs paramètres de fonctionnement ;
- on détermine un plan de fonctionnement du réseau (11) d'alimentation en énergie autarcique par le dispositif (20) d'ordinateur, en utilisant les données de modèle, le plan de fonctionnement indiquant l'état de fonctionnement du réseau (11) d'alimentation en énergie autarcique pendant un intervalle de temps déterminé ;
- on transmet le plan de fonctionnement au dispositif (18) local de commande ; et
- on commande les producteurs (15) d'énergie et/ou les consommateurs (16) d'énergie, conformément aux prescriptions du plan de fonctionnement par le dispositif (18) local de commande,
**caractérisé en ce que**
- le plan de fonctionnement comprend, pour l'intervalle de temps respectif, un plan de fonctionnement d'ensemble, qui indique une puissance électrique en un point (12) de raccordement au réseau, du réseau (11) d'alimentation en énergie autarcique et qui comprend des plans de fonctionnement partiels pour les producteurs (15) d'énergie et/ou les consommateurs (16) d'énergie du réseau (11) d'alimentation en énergie autarcique ; et
- en fonctionnement du réseau (11) d'alimentation en énergie autarcique, on forme, par le dispositif (18) local de commande, le bilan de puissance en cours du réseau (11) d'alimentation en énergie autarcique, sous la forme d'une différence entre la puissance injectée dans le réseau (11) d'alimentation en énergie autarcique et la puissance qui en est prélevée ;
- on détermine, par le dispositif (18) local de commande une puissance de réserve positive et une puissance de réserve négative du réseau (11) d'alimentation en énergie autarcique, la puissance de réserve positive étant déterminée sous la forme d'une différence entre la cession de puissance possible au maximum et la cession de puissance en cours réelle de tous les producteur d'énergie actifs et la puissance de réserve négative sous la forme d'une différence entre la cession de puissance en cours réelle et la cession de puissance possible au minimum de tous les producteurs d'énergie actifs ;
- on compare le bilan de puissance en cours à la puissance de réserve positive et négative ; et
- on tire parti du résultat de la comparaison pour commander les producteurs (15) d'énergie.

2. Procédé suivant la revendication 1,
**caractérisé en ce que**
- pour déterminer le plan de fonctionnement au moyen du dispositif (20) d'ordinateur pendant l'intervalle de temps respectif, on détermine une puissance injectée prévue des producteurs (15) d'énergie respectifs ; et
- on tire parti de la puissance injectée prévue des producteurs (15) d'énergie respectifs pour déterminer le plan de fonctionnement.

3. Procédé suivant la revendication 2,
**caractérisé en ce que**
- on détermine, pour l'intervalle de temps respectif et au moyen du dispositif (20) d'ordinateur, un pronostic météorologique pour la partie du réseau (1) d'alimentation en énergie autarcique ; et
- pour les producteurs (15) d'énergie, dont la puissance injectée dépend des conditions météorologiques en cours dans la région du producteur (15) d'énergie respectif, on détermine, en utilisant les informations du pronostic météorologique, qui sont pertinentes pour le fonctionnement du producteur (15) d'énergie respectif, ainsi qu'au moins une partie des données de modèle, la puissance injectée prévisible pour l'intervalle de temps respectif.

4. Procédé suivant l'une des revendications précédentes,
**caractérisé en ce que**
- on détecte les données de modèle comme entrées d'utilisateur par un éditeur (24) de données mis à disposition par le dispositif (20) d'ordinateur ou relié à celui-ci et on les met dans la mémoire de données du dispositif (20) d'ordinateur.

5. Procédé suivant l'une des revendications précédentes,
**caractérisé en ce que**
- on forme le dispositif (20) d'ordinateur par un dispositif de traitement de données constitué sous la forme d'un système d'ordinateur nuage.

6. Procédé suivant l'une des revendications précédentes,
**caractérisé en ce que**
- les plans de fonctionnement partiels comprennent chacun au moins une indication sur un état de branchement et une valeur de consigne de la cession de puissance ou de la consommation de puissance du producteur (15) d'énergie ou du consommateur (16) d'énergie respectif.

7. Procédé suivant la revendication 6,
**caractérisé en ce que**
- les plans de fonctionnement partiels comprennent aussi une indication sur les coûts, qui se produisent à la production d'énergie ou à la consommation d'énergie du producteur (15) d'énergie ou du consommateur (16) d'énergie respectif.

8. Procédé suivant l'une des revendications précédentes,
**caractérisé en ce que**
- pour un bilan de puissance, qui est inférieur ou égal à la puissance de réserve positive ou négative, on commande les producteurs (15) d'énergie branchés pour adapter en conséquence leur puissance à injecter ; et
- pour un bilan de puissance, qui est plus grand que la puissance de réserve positive ou négative, on modifie l'état de branchement d'au moins un producteur (15) d'énergie.

9. Procédé suivant la revendication 8,
**caractérisé en ce que**
- dans le cas où, pour un bilan de puissance qui est plus grand que la puissance de réserve positive ou négative, il n'y a pas d'autre producteur (15) d'énergie, dont l'état de branchement peut être modifié, on modifie l'état de branchement d'au moins un consommateur (16) d'énergie.

10. Procédé suivant l'une des revendications précédentes,
**caractérisé en ce que**
- on détecte, au moyen du dispositif (18) local de commande, alors que le réseau (11) d'alimentation en énergie autarcique est en fonctionnement, des valeurs de mesure, qui indiquent un état de fonctionnement des producteurs (15) d'énergie et/ou des consommateurs (16) d'énergie et/ou de l'ensemble du réseau (11) d'alimentation en énergie autarcique, en un point (12) de connexion au réseau ;
- on transmet au moins une partie des valeurs de mesure et/ou de valeurs qui s'en déduisent au dispositif (20) d'ordinateur ; et
- le dispositif (20) d'ordinateur détermine, en utilisant les valeurs de mesure transmises et/ou les valeurs qui s'en déduisent, un plan de fonctionnement mis à jour pour l'intervalle de temps en cours ou un intervalle de temps suivant.

11. Procédé suivant l'une des revendications précédentes,
**caractérisé en ce que**
- on détermine, par le dispositif (20) d'ordinateur, des plans de fonctionnement respectifs de plusieurs réseaux (11) d'alimentation en énergie autarciques ; et
- on commande, par le dispositif (18) local respectif de commande, les producteurs (15) d'énergie et/ou les consommateurs (16) d'énergie respectifs, des plusieurs réseaux (11) d'alimentation en énergie autarciques, conformément aux prescriptions du plan de fonctionnement respectif.

12. Système pour faire fonctionner un réseau (11) d'alimentation en énergie autarcique, le réseau (11) d'alimentation en énergie autarcique ayant un certain nombre de producteurs (15) d'énergie et un certain nombre de consommateurs (16) d'énergie, comprenant
- un dispositif (18) local de commande, conçu pour commander les producteurs (15) d'énergie et/ou les consommateurs (16) d'énergie ; et
- un dispositif (20) d'ordinateur, qui est supérieure hiérarchiquement au dispositif (18) local de commande et qui a une mémoire de données pour mettre à disposition des données de modèle du réseau (11) d'alimentation en énergie autarcique indiquant les producteurs (15) d'énergie respectifs ainsi que leurs paramètres de fonctionnement ; dans lequel
- le dispositif (20) d'ordinateur est conçu pour déterminer un plan de fonctionnement du réseau (11) d'alimentation en énergie autarcique, en utilisant les données de modèle et pour transmettre le plan de fonctionnement au dispositif (18) local de commande, le plan de fonctionnement indiquant l'état de fonctionnement du réseau (11) d'alimentation en énergie autarcique pendant un intervalle de temps déterminé ; et dans lequel
- le dispositif (18) local de commande est conçu pour commander les producteurs (15) d'énergie et/ou les consommateurs (16) d'énergie, conformément aux prescriptions du plan de fonctionnement ;
**caractérisé en ce que**
- le plan de fonctionnement comprend, pour l'intervalle de temps respectif, un plan de fonctionnement d'ensemble, qui indique une puissance électrique en un point (12) de connexion au réseau du réseau (11) d'alimentation en énergie autarcique et des plans de fonctionnement partiels des producteurs (15) d'énergie et/ou des consommateurs (16) d'énergie du réseau (11) d'alimentation en énergie autarcique ; et
- le dispositif (18) local de commande est conçu pour, alors que le réseau (11) d'alimentation en énergie autarcique est en fonctionnement, former le bilan de puissance en cours du réseau (11) d'alimentation en énergie autarcique sous la forme d'une différence entre la puissance injectée dans le réseau (11) d'alimentation en énergie autarcique et la puissance qui en est prélevée pour déterminer une puissance de réserve positive et une puissance de réserve négative du réseau (11) d'alimentation en énergie autarcique pour comparer le bilan de puissance en cours à la puissance de réserve positive et négative et pour tirer parti du résultat de la comparaison pour commander les producteurs (15) d'énergie, la puissance de réserve positive étant déterminée sous la forme d'une différence entre la cession de puissance possible au maximum et la cession de puissance en cours réelle de tous les producteurs d'énergie actifs et la puissance de réserve négative sous la forme d'une différence entre la cession de puissance en cours réelle et la cession de puissance possible au minimum de tous les producteurs d'énergie actifs.

13. Système suivant la revendication 12,
**caractérisé en ce que**
- le système est conçu pour faire fonctionner plusieurs réseaux (11) d'alimentation en énergie autarcique ; et
- au réseau (11) d'alimentation en énergie autarciques respectif sont associés, respectivement, leurs propres dispositifs (18) locaux de commande, qui sont en liaison avec le dispositif (20) d'ordinateur.
